## Europäisches Patentamt

## European Patent Office

## Office européen des brevets

(19)

(11) Publication number: **0 038 373**
**B1**

(12) **EUROPEAN PATENT SPECIFICATION**

(45) Date of publication of patent specification: **22.08.84**

(21) Application number: **80102192.4**

(22) Date of filing: **23.04.80**

(51) Int. Cl.³: **A 23 N 17/00, B 01 J 3/02,
B 30 B 9/18**

(54) Apparatus and method for discharge of pressure cooked particulate or fibrous material.

(43) Date of publication of application:
**28.10.81 Bulletin 81/43**

(45) Publication of the grant of the patent:
**22.08.84 Bulletin 84/34**

(84) Designated Contracting States:
**DE FR GB IT SE**

(56) References cited:
**GB-A-1 041 327
US-A-1 922 313
US-A-2 915 957
US-A-2 993 537
US-A-3 203 766
US-A-3 246 594
US-A-4 001 452**

(73) Proprietor: **STAKE TECHNOLOGY LTD.
20A Enterprise Avenue
Ottawa Ontario (CA)**

(72) Inventor: **Brown, Douglas Burthum
2104 Prince Charles Road
Ottawa Ontario, K2A 3L3 (CA)**
Inventor: **Bender, Robert
20 Victoria Street
Toronto Ontario, M5C 2N8 (CA)**

(74) Representative: **Patentanwälte Dipl.-Ing. A.
Grünecker, Dr.-Ing. H. Kinkeldey, Dr.-Ing. W.
Stockmair,
Dr. rer. nat. K. Schumann, Dipl.-Ing. P.H. Jakob,
Dr. rer. nat. G. Bezold Maximilianstrasse 58
D-8000 München 22 (DE)**

Courier Press, Leamington Spa, England.

## Description

This invention relates to processes and apparatus for the treatment of materials with gaseous reagents under pressure, and more particularly to a method and apparatus for discharging solid materials in a finely divided condition from pressure vessels in which gaseous reagents are maintained under pressure.

The need for chemical treatment of solid materials with gaseous reagents under conditions of elevated pressure and/or temperature arises in many processing applications. Examples include high pressure and temperature steam treatments of wood and wood pulp in pulp and paper manufacture and other utilizations of wood, the steam treatment of particulate materials or minerals such as gravel, stones and sand for cleaning and purifying processes, the treatment of mineral ores with gaseous reagents such as steam or acids to enrich the metal content thereof and aid in the extraction of metals therefrom, treatment of animal products with steam for rendering purposes, treatment of bitumens, coals, tar sands and other fuel values with gaseous reagents such as hydrocarbons for enrichment purposes, plasticizing treatments and the like. Where such processes are to be conducted continuously, and the product at the gaseous treatment is in a finely divided form, problems arise with the discharge of the finely divided product after treatment. Losses of gaseous reagent and gas pressures and temperatures from the pressurized reactor vessel as the treated product is continuously discharged therefrom need to be minimized, for economic reasons among others.

A typical example of such a process, shown in US—A—2993537, is the treatment of wood chips with steam at elevated pressures and temperatures, in a continuously operating pressurized steam digestor vessel, e.g. to prepare cellulose fibrous product. The resulting product is in finely divided fibrous form, and has a variety of different potential uses (insulation, animal fodder, etc.). The economics of the process require that the vessel be maintained at elevated temperatures and steam pressures, and that the fibrous product after treatment be continuously withdrawn from the vessel without excessive losses of steam pressures therefrom. The steam pressures in the vessel may be in the 14 to 21 bar range. The finely divided product materials must be discharged in such a manner that the physical nature of the product is not damaged, and that excessive wear and tear on apparatus parts is avoided.

It is an object of the present invention to provide a novel means of discharging divided material (e.g. fibrous or particulate) from a pressurized cooking vessel.

According to the present invention, material after cooking in a pressure vessel under preselected, elevated pressures of gaseous reagents for the required time, is delivered in finely divided form from the pressure vessel to a discharge conduit, whilst still under the same gas pressures. The downstream end of the discharge conduit has restricted, valved exit passageway therein. The cross-sectional area of the exit passage is considerably smaller than that of the discharge conduit. A conveyor is provided in the discharge conduit which moves the material delivered thereto towards the downstream end and compacts it against the downstream end in a compaction zone, to form a dense, compressed plug substantially impervious to the passage of reagent gases therethrough under the pressures experienced in the vessel and hence in the discharge conduit upstream of the plug. The exit conduit contains a valve which opens intermittently to permit a small amount of the material to exit. The valve is arranged to have an open position in which it presents an exit passage of substantially the same cross-sectional area as that of the exit conduit, to permit unobstructed passage of materials discharged through the open valve. The valve is moved very rapidly between its closed position and its fully open position so as to expose the entire leading face of the compacted material substantially simultaneously so that there is effectively no discharge of material through a half-open, obstructing valve.

These various features operate in combination with one another to form a discharge and decompression system which operates efficiently and economically. The formation of the dense, compact plug by the conveyor in the discharge conduit maintains the gas pressures upstream of the plug, e.g. in the pressure vessel, whilst the process is conducted continuously with intermittent material discharge. Gaseous reagent losses are effectively prevented at the discharge, thereby enhancing the economics of the process. The operation of the valve, to lie in a fully open position or in a fully closed position, with substantially no time spent in intermediate, half-open positions, also contributes to this effective elimination of gaseous reagent losses on discharge of materials. The compact plug is being continuously formed by the conveyor in the discharge conduit. Upon each opening of the valve, the downstream wall or leading face of the compacted plug collapses due to its sudden exposure to reduced pressure conditions. Since the valve is moved extremly rapidly to its fully open position, substantially the whole downstream face area is exposed at the same time, and a portion of the plug transverse to the direction of compacting forces and extending over the whole cross-section collapses for discharge. The overall thickness of the plug is changed only to a small degree, and the barrier to gaseous reagent passage maintained. With a gradually opening valve, parts of the downstream face of the plug would be exposed to reduced pressure preferentially to and for longer periods than other parts, with the attendant problem of partial collapse of the plug in certain areas only, with the same areas being exposed preferentially repeatedly, on each opening of the valve. The result would be channelling through the length of the plug to destroy the seal of the plug against gaseous reagent discharge. In addition, valve operation according to the invention reduces substantially the amount of wear experienced by the valve and hence prolongs its useful life. Impingement of particulate or fibrous materials on moving valve parts and against passageway-obstructing valve structures, with consequent wear thereof, is effectively reduced.

This mode of discharge according to the present invention has the additional advantage of allowing a greater degree of control of the processing times of material subject to reaction or treatment with pressurized gaseous reagents. With the substantially instantaneous movement of the discharge valve from its fully closed to its fully opened position, for a set period of time, small finite amounts of heated material pass through the valve, and thence to conditions of reduced pressure, with each valve opening. The discharged quantities thus decompress and cool by expansion, thereby stopping the treatment process, very rapidly. The residence time under treatment conditions of the materials is therefore closely controllable. This is in contrast to the situation where some material passes through a partly open, restricted valved outlet and some of the material passes through a fully open, unrestricted valved outlet. In such case, different portions of the material have different decompression and cooling times, so that the bulk of the material as a whole has an indefinite residence time under treatment conditions.

Thus according to a first aspect of the invention, there is provided an apparatus for discharging particulate or fibrous material from a pressurized vessel, comprising: a discharge conduit having an upstream end, a downstream end and a materials compaction zone adjacent its downstream end, the upstream end communicating with the pressurized vessel; a feed conveyor for feeding material to and compacting material in the compaction zone of the discharge conduit; a materials outlet at the downstream end of the discharge conduit, and comprising an exit passage of smaller cross-sectional area than that of the discharge conduit so as to cause compaction of material in the compaction zone by the feed conveyor; valve means in said exit passage, said valve means being movable rapidly between a fully open position and a fully closed position to permit passage of said material therethrough.

According to a second aspect of the present invention, there is provided a process for discharging cooked particulate or fibrous material from a pressure cooking vessel, which comprises: continuously delivering said material, under pressure cooking conditions, to an exit conduit; continuously compacting said material into a dense compact plug substantially impervious to passage therethrough of reagent gases under the cooking pressures existing in said cooking vessel, said plug having a leading face disposed in said exit conduit in a direction away from the cooking vessel and separated therefrom by at least the thickness of the plug; intermittently and for predetermined brief intervals of time exposing the leading face of said compacted plug to atmospheric pressure conditions, said exposure taking place substantially simultaneously over the entire area of said leading face, so as to discharge the leading portion of said plug to atmospheric conditions.

The process and apparatus of the present invention are particularly suitable for the steam pressure cooking of cellulosic fibrous materials such as wood chips, e.g. in the preparation of animal fodder for ruminants. The fibrous nature of the material so produced, which is in finely divided form, compacts in the discharge conduit to form a suitably dense mass or plug, substantially impervious to the passage of steam therethrough. Moreover, the manner of discharge according to the invention has a beneficial effect upon the degree of digestibility of the fibrous product by ruminants, believed due to the resultant surface pore structure of the fibrous material.

In the preferred embodiment of the present invention, the rate of movement of the material through the pressurized treatment vessel and into the discharge conduit, the geometry of the discharge conduit and its conveyor, the speed of operation of the conveyor and the frequency of operation of the discharge valve, are all adjusted in relationship to one another, to obtain the desired processing conditions for the material. These parameters are preferably adjusted to achieve a bulk density of the compressed plug of material in the discharge conduit upstream of the exit passage in the range of from about 80 to about 320 $g/dm^3$, preferably from about 160 to about 240 $g/dm^3$, of equivalent oven dry materials.

The actual densities experienced in the discharge conduit will be higher than these values in many cases, because of the presence of moisture in the material. The actual maximum should not exceed about 40 pounds per cubic foot, to avoid placing undue demands on the equipment. The minimum acceptable bulk density is that which will effectively prevent gas discharge through the exit conduit on opening of the valve, at the chosen pressures. This varies to some extent depending upon the nature of the material being cooked. As is well-known in the art, permeability to steam and the like, of a fibrous material such as steam cooked wood, increases steeply as the void space in the mass of the fibrous material decreases, in a manner which is characteristic of the particular material. There is of course a maximum degree of compaction which should not be exceeded in practice, or the structural strength of the compacted plug becomes too great for its collapse and discharge through the opened valve. Acceptable operating conditions will be found within the aforementioned bulk density ranges. The speed at which the valve moves from its fully closed position to its fully open position is faster than the speed at which the downstream end wall of the compacted plug breaks down, on exposure to atmospheric pressure conditions, to ensure that steam losses are substantially avoided. The speed and frequency of operation of the valve, the length of the discharge conduit, the speed of operation of the conveyor therein and the rate of feed of material from the pressure vessel to the discharge conduit, factors controlling the bulk density of the material immediately upstream of the valve, are all adjusted with this feature in view. As an example, the treatment time of the material may be within the range of 4—5 minutes, with the valve opening every ten-fifteen seconds, to balance the continuous treatment and intermittent discharging of the material. The preferred form of feed conveyor in the discharge conduit is an Archimedean screw conveyor, which can cause the necessary degree of compaction without undue shearing of the material.

Also in accordance with the preferred embodiment of the invention, throttling of the material, i.e. movement of the material from high pressure, processing conditions to atmospheric pressure conditions, with consequent expansion thereof, takes place at a location downstream of and remote from the valve itself. Suitably this is accomplished by the provision of a throttle tube downstream of the valve, of similar cross-section to the valve passageway, through which the material discharges from the valve to atmosphere.

The separation of throttling acting and the discharge valve in the apparatus and process of the present invention is a further advantageous feature in the successful operation thereof. At the time of its compaction upstream of the discharge valve, and until it passes through the discharge valve, the material is still under treatment conditions, and is very hot. The passage of the material through the discharge valve effectively terminates the process, and the rate and frequency of operation of the valve, along with the size of its discharge aperture, is a significant factor in determining the residence time under treatment conditions of the material. In other words, the discharge valve modulates the flow rate in the continuous process. By separating the two features of discharge rate control, to be done solely by the valve, and throttling of the material, to be done downstream and remote from the valve, faster cooling rates are attainable. Prior art proposals tended to throttle the treated material across the discharge valve, with consequent loss of control and speed of cooling and expansion.

The flow characteristics of finely divided particulate or fibrous (i.e. semi solid) materials are different from those of fluid materials. One does not observe the same degree of continuity of flow over full control ranges of a discharge valve with semi solid material. Upon exit from the discharge valve, and exposure to reduction in pressure, the semi solid material will flow readily and easily through a fully open valve passageway, but not through a restricted valve passageway. Moreover, a high degree of turbulence in the discharge stream is created in the process of the present invention, where the valve moves suddenly and rapidly to its fully opened position from its fully closed position. This turbulence is desirable, since it improves the heat dissipation from the material and leads to a rapid rate of cooling on discharge from the outlet tube. The amount of turbulence is controllable by changing the length of the outlet or throttle tube. Preferably, the length of the throttle tube is about three to five times the diameter of the valve outlet passageway. The separation of the discharge valve from the throttle in the preferred form of the invention separates the function of flow rate modulation, reserved to the valve, and expansion of the material. Erosion of the valve by contact with the turbulent stream of expanding material is thus avoided, further to prolong the useful life of the valve and reduce equipment maintenance costs.

The preferred form of valve for use in the present invention is a ball valve, in which the ball is rotatable by power means in a housing through a 90° or 180° angle, and has a diametric passageway extending therethrough, of substantially the same cross-sectional shape and area as that of the exit passage and throttle tube. Such a valve can be operated, e.g. by hydraulic or pneumatic actuating cylinders connected to its operating lever, or by standard electrical means, with timed actuation, sufficiently rapidly for use in the present invention. With such a valve, even when it is half way towards its open position, only ten per cent of its fully open flow passageway diameter is available for passage of material therethrough. This factor, in addition to its very rapid movement between its fully opened and fully closed position, makes such a valve eminently suitable for use in the present invention. A commercially available form of such a valve is a Kamyr Stellite-Seat Full Bore Valve (Registered Trademark).

In accordance with a further advantageous feature of the present invention, the creation of the compact plug immediately upstream of the discharge valve provides a beneficial and convenient location for addition to the treated material of chemical reagents. Thus, reagents can be added to the compacted plug immediately upstream of the discharge valve or elsewhere in the compacting zone of the discharge conduit. The dense nature of the plug effectively prevents blow back of the reagents into the pressure vessel, to interfere with the chemical treatment process therein. Mixing of the added reagents through the product will occur on passage through the discharge valve and turbulent flow in the throttle tube, whilst the material is still hot.

As noted above, the process of the invention is particularly suitable for the steam pressure cooking of wood chips, to produce cellulosic fibrous product, e.g. for use as animal fodder. In such case, the cooling of the cooked cellulosic material is best conducted by rapid adiabatic expansion of the cooked material, which occurs on throttling of the material. If cooling of the material from cooking temperatures to storage temperatures takes place too slowly, it has been found that the nutritive value and digestibility of the product decreases. This is believed to be due to changes which occur in the physical nature of the product on slow cooling. The pore sizes in the material become so small, if cooling is not conducted rapidly enough, that the ability of the digestion enzymes in the animal's digestive system to attack the material becomes impaired. Thus, it is desirable to "freeze" the cooked material in its open-pore, freshly cooked physical condition. The separation of the discharge valve and the throttling action are achieved in the preferred form of the invention by the provision of an outlet tube downstream of the valve, of substantially the same crosssectional area and shape as that of the valve orifice and the exit passageway. Throttling thus takes place in the outlet tube and predominantly at the downstream end thereof.

A result of the steam digestion of substantially any hardwood material is the production therein of acetic acid. Ammonium acetate is a synthetic protein of nutritional value to ruminant animals, although it is not of much use to humans. It is therefore of advantage to add ammonia to the cooked material in the vicinity of the compacted plug immediately upstream of the discharge valve. The addition of ammonia to the cooked product will thus produce ammonium acetate in situ and enhance the value of the product. However, it is important to prevent the added ammonia from entering the cooking digestor, where it will interfere with the steam cooking process.

A specific preferred embodiment of the present invention as applied to the steam pressure cooking of wood, is illustrated diagrammatically in the accompanying drawings, in which:

FIGURE 1 is a cross-sectional view of an apparatus according to the present invention;

FIGURE 2 is a side view, partly in section, of the valve of the apparatus of Figure 1, in the open position;

FIGURE 3 is a graph showing the opening and closing characteristics of the valve of Figure 2.

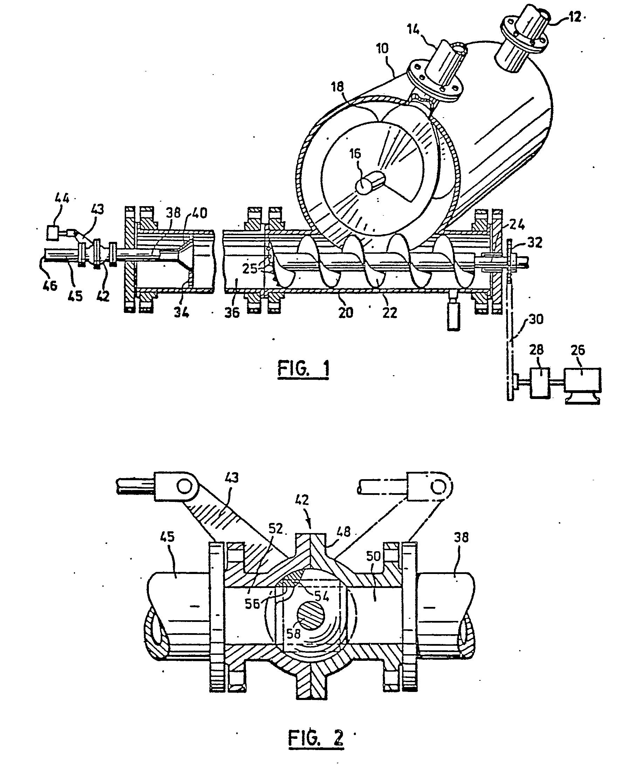

With reference to FIG. 1, there is diagrammatically illustrated therein a pressurized cooking vessel 10 in the form of a horizontally disposed cylinder having inlet and exhaust conduits 12, 14, a central rotating horizontal shaft 16 and a screw conveyor 18 secured to the shaft 16. In operation, wood chips or similar materials are continuously fed to vessel 10, cooked under suitable pressures of saturated steam therein, and continuously conveyed horizontally through vessel 10 by conveyor 18.

At one horizontal end, the vessel 10 communicates with a discharge conduit 20 in the form of a horizontal tube, which contains therein a horizontally mounted Archimedean screw conveyor 22, the peripheries of the flights of which are disposed in close proximity to the internal walls of the conduit 20. The screw 22 is mounted on a central horizontal rotating shaft 24, power driven by means of a motor 26, gear train 28, chain drive 30 and sprocket 32. The downstream flight of screw 22 is provided with axially projecting mastication teeth 25. Cooked woody material is delivered from cooking vessel 10 into the flights of screw conveyor 22, and then moved to the left as shown in FIG. 1, by screw conveyor 22. The discharge conduit 20 is in free communication with the interior of vessel 10, so that it is under the same pressures of saturated steam.

The screw 25 terminates some distance from the downstream end 34 of conduit 20, leaving a zone 36 of the discharge conduit 20 unobstructed. At its downstream end 34, conduit 20 communicates with a material outlet comprising an exit passage 38 of small cross-sectional area, with a conical entrance 40 thereto. Downstream of the entrance 40, the exit passageway 38 is provided with a discharge valve 42, with an operating lever 43 and actuation means 44. Downstream of the valve 42 is a throttle tube 45 of substantially the same cross-sectional shape and area as that of exit passageway 38. Throttle tube 45 terminates in a discharge outlet end 46.

In the operation of the apparatus, the screw 20 feeds materials delivered thereto towards the downstream end 34 of conduit 20 and into exit passageway 38. As a result, a dense compact plug of fibrous material is formed in compacting zone 36 of conduit 20 and in exit passageway 38 before valve 42. Ammonia can be added to the product in zone 36 or passageway 38 if desired. Valve 42 opens suddenly and intermittently to allow a small amount of the compacted plug of material to exit to throttle tube 45 on each valve opening. The compact density of the plug of fibrous material prevents loss of steam pressures through the valve 42 when it opens. The material expands and cools adiabatically on passing out of outlet 46 from throttle tube 45, i.e. at a location remote from the valve 42. Flow rates, conveyor speeds, valve opening durations and frequencies are all adjusted to optimize the cooking process in vessel 10 and ensure a sufficiently compact, dense plug ahead of valve 42 to prevent steam losses.

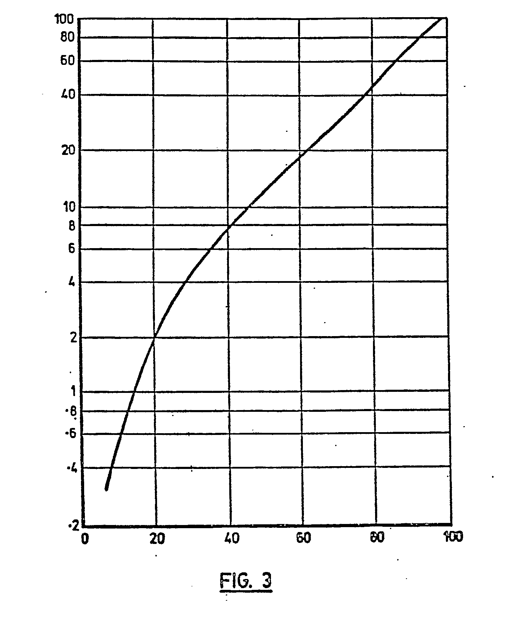

The valve 42 and its operation are illustrated in more detail in FIGS. 2 and 3. In FIG. 2, the valve is shown in its open position. The valve 42 comprises a housing 48 of part spherical form with respective inlet and outlet conduits 50, 52 communicating therewith. The inlet and outlet conduits 50, 52 communicate with and are of substantially the same size as exit passageway 38 and throttle tube 45 respectively. A rotatable valve element 54 is mounted for rotation in the housing 48, the valve element 54 having a generally spherical periphery for rotation in the housing. The valve element has a bore 56 therethrough, of the same cross-sectional shape and size as inlet and outlet conduits 50, 52, and turns with central shaft 58 to bring the bore 56 in registry with conduits 50, 52 in the open position of valve 42. Operating lever 43 is connected to cause rotation of valve element 54. To close the valve 42, lever 43 moves through approximately 90 degrees to its position shown in broken lines in FIG. 2, with consequent rotation of valve element through 90 degrees, about the axis of shaft 58, to bring bore 56 completely out of registry with inlet and outlet conduits 50, 52 so as fully to close the valve.

FIG. 3 graphically illustrates the opening and closing characteristics of the valve of FIG. 2, with the percentage of material flow through the valve 42 plotted logarithmically as vertical axis against percentage of rotation of the valve element through its 90 degree opening and closing arc as horizontal axis.

From this curve it will be seen that, when the valve element is turned 20 percent through its arc from its closed to its open position, only 2 percent of the total flow of material through the valve is permitted. When the actuator is turned 50 percent towards its open position, about 12 percent of total flow is permitted. It is not until the valve actuator has turned about 84 percent of the way to its open position that as much as 50 percent of the total material flow through is permitted. These opening and closing characteristics, together with very rapid actuation of lever 43 through its 90 degree arc and similar such movement of the valve element 54, ensure that the valve is either fully open or fully closed at substantially all times, and only for very brief intervals is a partially open valve, with an obstructed valve passage, presented to the downstream face of the compacted plug of material. In consequence, the plug face is suddenly presented with an open valve and reduced pressure exposure across substantially its whole face area, so that the entire face collapses to form an exit quantity of material to pass through the valve. Meanwhile the plug is rebuilt and compacted forwardly by the screw 20, until the valve opens again to permit exit of another quantity from the forward face thereof.

The operating means 44 for the valve 42 is preferably a pneumatic cylinder and piston connected to operating lever 44, and equipped with an adjustable timing device to cause very sudden and rapid movement of the piston under high pneumatic pressure. Such mechanisms are known and do not require a detailed description herein. Other suitable means can also be used, provided that they are capable of rapid movement to cause the valve to move rapidly between its fully open and fully closed positions.

## Claims

1. Apparatus for discharging particulate or fibrous material from a pressurized vessel (10), the apparatus comprising a discharge conduit (20) in communication with the vessel (10), a feed conveyor (22) for feeding material towards the downstream end (34) of the discharge conduit (20), an exit passage (38) communicating with the downstream end of the discharge conduit (20), and a valve (42) controlling exit of the material from the vessel (10) via the discharge conduit (20) and the exit passage (38); characterized in that the exit passage (38) is of small cross-sectional area as compared with that of the discharge conduit so as to form a compaction zone at the downstream end (34) of the discharge conduit (20) into which material is compacted by operation of the feed conveyor (22), and the valve (42) is located in the exit passage (38) and is movable rapidly between a fully open position and a fully closed position so as to expose the entire leading face of the compacted material substantially simultaneously and to permit intermittent discharge of material from the vessel (10) through the exit passage (38).

2. Apparatus according to claim 1 further characterized by operating means (42, 43) for the valve adapted to move the valve rapidly between its fully open and fully closed position, at predetermined intervals, to allow intermittent passage therethrough of cooked materials.

3. Apparatus according to claim 1 or claim 2 further characterized in that the valve (42) in its fully open position presents an outlet therethrough of substantially the same cross-sectional shape and area as that of the exit passage, and in substantial alignment therewith.

4. Apparatus according to any preceding claim further characterized in that the feed conveyor (22) comprises an Archimedean screw disposed with the discharge conduit (20) and adapted to be rotated to move the material downstream in the discharge conduit and compact the material in the compaction zone thereof.

5. Apparatus according to any preceding claim further characterized in that the valve (42) comprises a ball valve having a valve element (54) therein which is rotatable between a valve open and a valve closed position, said valve element having a passageway (56) therethrough which registers with the exit passage (38) when the valve is in the fully open position, the passageway through the valve elements (54) being of substantially the same cross-sectional shape and area as that of the exit passage.

6. Apparatus according to claim 5 further characterized by the provision of a throttle tube (45) extending downstream of the valve (42) and in communication with the outlet side thereof, said throttle tube being of substantially the same cross-sectional shape and area as that of the passageway (56) through the valve element (54).

7. Process for discharging particulate or fibrous material from a pressure cooking vessel in which the material is:

continuously delivered under pressure cooking conditions, to an exit conduit (38) characterized by the steps of

continuously compacting said material into a dense compact plug substantially impervious to passage therethrough of reagent gases under the cooking pressures existing in the cooking vessel (10), the plug having a leading face disposed in the exit conduit (38) in a direction away from the cooking vessel (10) and separated therefrom by at least the thickness of the plug;

intermittently and for predetermined brief intervals of time exposing the leading face of the compacted plug to atmospheric pressure conditions, the exposure taking place over the entire area of the leading face substantially simultaneously, so as to discharge the leading portion of the plug to atmospheric conditions.

8. The process of claim 7, further characterized in that the material is cellulosic fibrous material and the reagent gas is steam.

9. The process of claim 7 or claim 8, further characterized in that the material is compacted in the plug to a bulk density in the range of from about 80 to about 320 g/dm³, of equivalent oven dry material.

**Patentansprüche**

1. Gerät zum Austragen von körnigem oder faserigem Material aus einem unter Druck stehenden Gefäß (10), wobei das Gerät eine Austragsröhre (20) in Verbindung mit dem Gefäß (10), einen Förderer (22) zum Fördern von Material in Richtung zum stromabwärtigen Ende (34) der Austragsröhre (20), einen Ausgangsdurchlaß (38), der mit dem stromabwärtigen Ende der Austragsröhre (20) in Verbindung steht und ein Ventil (42) aufweist, das die Abgabe von Material aus dem Gefäß (10) über die Austragsröhre (20) und den Ausgangsdurchlaß (38) steuert; dadurch gekennzeichnet, daß der Ausgangsdurchlaß eine geringe Querschnittsfläche verglichen mit der Austragsröhre besitzt, derart daß eine Verdichtungszone am stromabwärtigen Ende (34) der Austragsröhre (20) gebildet wird, in der Material durch das Arbeiten des Förderers (22) verdichtet wird, und das Ventil (42) in dem Ausgangsdurchlaß (38) angeordnet und rasch zwischen einer vollständig offenen Position und einer vollständig geschlossenen Position bewegbar ist, derart daß die ganze vordere Stirnfläche des verdichteten Materials im wesentlichen gleichzeitig freigegeben wird und ein intermittierender Austrag von Material von dem Gefäß (10) durch den Ausgangsdurchlaß (38) ermöglicht wird.

2. Gerät nach Anspruch 1, ferner gekennzeichnet durch Betätigungsvorrichtungen (42, 43) für das Ventil, die geeignet sind, das Ventil rasch zwischen seiner vollständig geöffneten und vollständig geschlossenen Position zu vorbestimmten Intervallen zu bewegen, um einen intermittierenden Durchlaß von gekochtem Material hindurch zu ermöglichen.

3. Gerät nach Anspruch 1 oder nach Anspruch 2, ferner dadurch gekennzeichnet, daß das Ventil (42) in seiner vollständig geöffneten Position einen Auslaß hindurch von im wesentlichen der gleichen Querschnittsform und -fläche bietet als der Ausgangsdurchlaß und im wesentlichen dazu ausgerichtet ist.

4. Gerät nach einem vorhergehenden Anspruch, ferner dadurch gekennzeichnet, daß der Förderer (22) eine Archimedische Schraube darstellt, die in der Austragsröhre (20) angeordnet und geeignet ist, gedreht zu werden, um Material in der Austragsröhre stromabwärts zu bewegen und das Material in deren Verdichtungszone zu verdichten.

5. Gerät nach einem vorhergehenden Anspruch, ferner dadurch gekennzeichnet, daß das Ventil (42) ein Kugelventil umfaßt mit einem Ventilelement (54) darin, das drehbar ist zwischen einer Ventiloffen- und einer Ventilschließstellung, wobei das Ventilelement einen Durchlaß (56) hindurch aufweist, der mit dem Ausgangsdurchlaß (38) fluchtet, wenn das Ventil sich in der vollständig offenen Position befindet, wobei der Durchlaß durch die Ventilelemente (54) im wesentlichen die gleiche Querschnittsform und -fläche wie der Ausgangsdurchlaß besitzt.

6. Gerät nach Anspruch 5, ferner gekennzeichnet durch das Vorsehen einer Drosselröhre (45), die sich vom Ventil (42) stromabwärts erstreckt und mit der Auslaßseite desselben in Verbindung ist, wobei die Drosselröhre im wesentlichen die gleiche Querschnittsform und -fläche besitzt wie der Durchlaß (56) durch das Ventilelement (54).

7. Verfahren zum Austragen von körnigem oder faserigem Material aus einem Druckkochkessel, in dem das Material

kontinuierlich unter Druckkochbedingungen an eine Ausgangsröhre (38) angeliefert wird, gekennzeichnet durch die Schritte

kontinuierliches Verdichten des Materials zu einem dichten kompakten Stopfen, der im wesentlichen undurchdringlich ist für Reagenzgase unter Kochdrucken, die in dem Kochgefäß (10) herrschen, wobei der Stopfen eine vordere Stirnfläche aufweist, die in der Austragsröhre (38) in einer Richtung weg von dem Kochgefäß (10) gerichtet und von diesem zumindest durch die Dicke des Stopfens getrennt ist;

intermittierendes, für vorbestimmte kurze Zeitintervalle erfolgendes Freigeben der vorderen Stirnfläche des verdichteten Stopfens für atmosphärische Druckbedingungen, wobei die Freigabe über die gesamte Fläche der vorderen Stirnfläche im wesentlichen gleichzeitig erfolgt, um den vorderen Teil des Stopfens in atmosphärische Bedingungen auszutragen.

8. Verfahren nach Anspruch 7, ferner dadurch gekennzeichnet, daß das Material ein zelluloseartiges faseriges Material und das Reagenzgas Dampf ist.

9. Verfahren nach Anspruch 7 oder Anspruch 8, ferner dadurch gekennzeichnet, daß das Material auf ein Schüttgewicht im Bereich von etwa 80 bis etwa 320 g/dm³ des äquivalenten Ofentrockenmaterials verdichtet wird.

**Revendications**

1. Appareil pour évacuer des produits particulaires ou fibreux d'une cuve sous pression (10), l'appareil comportant un conduit d'évacuation (20) communiquant avec la cuve (10), un convoyeur d'alimentation (22) pour amener le produit vers l'extrémité aval (34) du conduit d'évacuation (20), un passage de sortie (38) communiquant avec l'extrémité aval du conduit d'évacuation (20), et une vanne (42) commandant la sortie du produit de la cuve (10) par l'intermédiaire du conduit d'évacuation (20) et du passage de sortie (38), caractérisé en ce que le passage de sortie (38) a une petite surface en section transversale par comparaison avec celle du conduit d'évacuation de façon à former une zone de compactage à l'extrémité aval (34) du conduit d'évacuation (20), dans laquelle le produit est compacté par le fonctionnement du convoyeur d'alimentation (22), et en ce que la vanne (42) est disposée dans le passage de sortie (38) et peut se déplacer rapidement entre une position complètement ouverte et une position complètement fermée de façon à exposer toute la face antérieure du produit compacté pratiquement simultanément et à permettre une évacuation intermittente du produit de la cuve (10) à travers le passage de sortie (38).

2. Appareil selon la revendication 1, caractérisé par des moyens d'actionnement (43, 44) pour la vanne, adaptés pour déplacer rapidement la vanne entre sa position complètement ouverte et sa position complètement fermée, à intervalles prédéterminés, pour permettre le passage intermittent à travers la vanne des produits cuits.

3. Dispositif selon la revendication 1 et la revendication 2, caractérisé en ce que la vanne (42) dans sa position complètement ouverte présente une sortie la traversant ayant pratiquement la même forme et la même dimension en coupe transversale que le passage de sortie, et alignée pratiquement avec lui.

4. Appareil selon l'une quelconque des revendications précédentes, caractérisé en ce que le convoyeur d'alimentation (22) est une vis d'Archimède disposée dans le conduit d'évacuation (20) et adaptée pour tourner afin de déplacer le produit vers l'aval dans le conduit d'évacuation et le compacter dans la zone de compactage.

5. Appareil selon l'une quelconque des revendications précédentes, caractérisé en ce que la vanne (42) est une vanne à boisseau sphérique, ayant un boisseau (54) qui peut tourner entre une position d'ouverture et une position de fermeture de la vanne, ce boisseau ayant un passage traversant (56) qui correspond avec le passage de sortie (38) lorsque la vanne est dans la position complètement ouverte, le passage à travers la boisseau (54) ayant pratiquement la même forme et la même surface en section transversale que le passage de sortie.

6. Appareil selon la revendication 5, caractérisé en ce qu'un tube d'étranglement (45) s'étend en aval de la vanne (42) et communique avec le côté sortie de celle-ci, ce tube d'étranglement ayant pratiquement la même forme et la même surface en section transversale que le passage (56) à travers le boisseau (54).

7. Procédé pour évacuer un produit particulaire ou fibreux d'une cuve de cuisson sous pression, dans lequel le produit est amené en continu dans les conditions de la cuisson sous pression jusqu'à un conduit de sortie (38), caractérisé en ce que:

on compacte en continu ce produit en un tampon compact dense pratiquement imperméable au passage à travers lui des gaz de réaction dans les conditions de pression de cuisson existant dans la cuve de cuisson (10), le tampon ayant une face antérieure disposée dans le conduit de sortie (38) en étant orienté en sens inverse de la cuve de cuisson (10) et séparé de ce conduit par au moins l'épaisseur du tampon;

on expose de façon intermittente et pendant de brèves périodes prédéterminées la face antérieure du tampon compacté aux conditions atmosphériques, l'exposition ayant lieu sur toute la surface de la face antérieure pratiquement simultanément de façon à évacuer la portion antérieure du tampon à l'environnement.

8. Procédé selon la revendication 7, caractérisé en ce que le produit est un produit fibreux cellulosique et que le gaz de réaction est la vapeur.

9. Procédé selon la revendication 7 ou la revendication 8, caractérisé en ce que le produit est compacté en tampon à une densité comprise entre environ 80 et 320 g/dm³, du produit sec étuvé équivalent.

FIG. 1

FIG. 2

FIG. 3